# EUROPEAN PATENT APPLICATION

(11) **EP 4 660 330 A1**
(43) Date of publication of application: **10.12.2025**
(21) Application number: 24750391.5
(22) Date of filing: 01.02.2024
(51) Int. Cl.: C21D 9/46, C21D 8/12, C22C 38/00, C22C 38/60, C23C 22/00, H01F 1/147

(54) **METHOD FOR PRODUCING GRAIN-ORIENTED ELECTRICAL STEEL SHEET**

(30) Priority: 01.02.2023 JP 2023013751
(71) Applicant: NIPPON STEEL CORPORATION, Chiyoda-ku Tokyo 100-8071 (JP)
(72) Inventor: Kataoka, Takashi, Tokyo 100-8071 (JP); Takeda, Kazutoshi, Tokyo 100-8071 (JP); Kubota, Masamitsu, Tokyo 100-8071 (JP); Hirayama, Takaaki, Tokyo 100-8071 (JP); Tomita, Yuki, Tokyo 100-8071 (JP)
(74) Representative: Vossius & Partner Patentanwälte Rechtsanwälte mbB
(86) International application number: PCT/JP2024/003324
(87) International publication number: WO 2024/162442

(57) **Abstract**

A method for manufacturing a grain-oriented electrical steel sheet includes a hot rolling step, a hot-band annealing step, a cold rolling step, a decarburization annealing step, a separator applying step, a finish annealing step, a surface treatment step, a thermal oxidation-reduction annealing step, and a tension-applying insulating coating forming step, in which the thermal oxidation-reduction annealing step includes a primary temperature rising process of heating a surface-treated steel sheet to raise the temperature of the surface-treated steel sheet, a primary annealing process of holding a steel sheet temperature at a constant temperature in a range of 800°C to 900°C for a constant holding time in a range of 10 seconds to 200 seconds in an atmosphere having a constant value in a range of an oxygen potential PH₂O/PH₂ of 0.10 to 10.00, and a secondary annealing process of holding the steel sheet temperature at a constant temperature in a range of 900°C to 1100°C for a constant holding time in a range of 3 seconds to 100 seconds in an atmosphere having a constant value in a range of an oxygen potential PH₂O/PH₂ of less than 0.1000 and a dew point of less than -20°C.

## Description

### TECHNICAL FIELD

The present invention relates to a method for manufacturing a grain-oriented electrical steel sheet.

Priority is claimed on Japanese Patent Application No. 2023-013751, filed February 01, 2023, the content of which is incorporated herein by reference.

### BACKGROUND ART

A grain-oriented electrical steel sheet is a steel sheet that contains silicon (Si) in an amount of about 0.5 mass% to 7 mass% and has crystal orientations integrated in an {110}<001> orientation (Goss orientation) by utilizing a phenomenon called secondary recrystallization, and is mainly used for cores of transformers or the like as a soft magnetic material. Since the characteristics of grain-oriented electrical steel sheets generally affect the performance of transformers, intensive studies have been conducted on grain-oriented electrical steel sheets in order to achieve favorable excitation characteristics and low iron loss characteristics.

A general method for manufacturing a grain-oriented electrical steel sheet is as follows.

First, a steel piece having a predetermined chemical composition is heated and hot-rolled to manufacture a hot-rolled steel sheet. The obtained hot-rolled steel sheet is subjected to hot-band annealing as necessary, and then the hot-rolled steel sheet is pickled. The hot-rolled steel sheet after the pickling is cold-rolled to manufacture a cold-rolled steel sheet. The obtained cold-rolled steel sheet is subjected to decarburization annealing to develop primary recrystallization.

Then, an aqueous slurry containing an annealing separator containing MgO as a main component is applied to the surface of the cold-rolled steel sheet after the decarburization annealing and dried. Thereafter, the steel sheet is coiled into a coil and subjected to finish annealing to develop secondary recrystallization. During the finish annealing, simultaneously with the development of secondary recrystallization in the steel sheet, MgO in the annealing separator reacts with SiO₂ in an internal oxide layer formed on the surface of the cold-rolled steel sheet during the decarburization annealing, such that a glass coating (also referred to as "primary coating") containing forsterite (Mg₂SiO₄) as a main component is formed on the surface of the base steel sheet.

After the finish annealing (after forming the primary coating), a chemical solution containing, for example, silica and a phosphate as main components is applied to an upper layer of the primary coating and baked to form a tension-applying insulating coating (also referred to as "secondary coating").

The primary coating functions as an insulating coating and also has a function of improving adhesion of a secondary coating formed on an upper layer of the primary coating. The iron loss is reduced by the tension of both the primary coating and the secondary coating. However, the primary coating is a non-magnetic phase and is not preferable from the viewpoint of magnetic characteristics. In addition, the interface between the base steel sheet and the primary coating has a complicated structure in which the roots of the primary coating are intricate in the base steel sheet, and may inhibit magnetic domain wall motion to cause an increase in iron loss in some cases.

### Citation List

### Patent Documents

Patent Document 1: Japanese Unexamined Patent Application, First Publication No. H08-269560
Patent Document 2: PCT International Publication No. WO 2019/182149
Patent Document 3: PCT International Publication No. WO 2020/149345

### SUMMARY OF INVENTION

### Technical Problem

Due to the above background, many inventions related to a grain-oriented electrical steel sheet without a primary coating have been made. For example, Patent Document 1 described above discloses a manufacturing method in which, in an annealing separator applying step before a secondary recrystallization annealing step, a chloride is added to an annealing separator to suppress generation of a primary coating and to peel off the primary coating. This manufacturing method has high industrial value due to its simplicity.

However, since the adhesion of a secondary coating is not sufficient because a primary coating is not formed, for example, in Patent Document 2 described above, protrusions and recesses are formed on a surface of a base steel sheet after secondary recrystallization annealing and before an application and baking step of the secondary coating is performed. According to this manufacturing method, coating adhesion is secured by the anchor effect generated at the interface between the base steel sheet and the secondary coating. However, the protrusions and recesses of the interface may become an obstacle to magnetic domain wall motion when the grain-oriented electrical steel sheet is magnetized, and may become a factor that hinders reduction in iron loss.

In Patent Document 3, prior to the application of the secondary coating chemical solution, the base steel sheet is subjected to intermediate annealing. In this manufacturing method, an oxide film is generated on the surface of the base steel sheet and used as an interlayer when the secondary coating is brought into close contact with the base steel sheet, and it is possible to achieve both high magnetic characteristics and high coating adhesion. As described above, high coating adhesion was obtained by intermediate annealing. On the other hand, for the purpose of further improving the performance of the transformer, a grain-oriented electrical steel sheet having higher coating adhesion has been required.

The present invention has been made in view of the above circumstances, and an object thereof is to provide a method for manufacturing a grain-oriented electrical steel sheet capable of manufacturing a grain-oriented electrical steel sheet having higher coating adhesion (secondary coating adhesion) without impairing magnetic characteristics.

### Solution to Problem

In order to solve the above problems and achieve the objects, the present invention adopts the following aspects.
(1) A method for manufacturing a grain-oriented electrical steel sheet according to an aspect of the present invention includes:
   a hot rolling step of heating and hot rolling a slab including, as a chemical composition, by mass%,
   C: 0.020% to 0.150%,
   Si: 3.00% to 4.00%,
   Mn: 0.01% to 0.50%,
   S: 0.0010% to 0.0400%,
   acid-soluble Al: 0.010% to 0.050%,
   N: 0.002% to 0.020%,
   Bi: 0.0000% to 0.0200%,
   P: 0.000% to 0.100%,
   Sn: 0.00% to 0.50%,
   Cu: 0.00% to 0.50%,
   Cr: 0.00% to 0.50%,
   Sb: 0.00% to 0.20%,
   Mo: 0.00% to 0.10%,
   Nb: 0.0000% to 0.0200%,
   B: 0.0000% to 0.0200%,
   Te: 0.0000% to 0.0200%,
   Ni: 0.00% to 0.20%,
   Se: 0.0000% to 0.0200%, and
   a balance being Fe and impurities to obtain a hot-rolled steel sheet;
   a hot-band annealing step of subjecting the hot-rolled steel sheet to hot-band annealing to obtain a hot-band annealed sheet and then immersing the hot-band annealed sheet in a pickling solution;
   a cold rolling step of subjecting the hot-band annealed sheet to cold rolling to obtain a cold-rolled steel sheet;
   a decarburization annealing step of subjecting the cold-rolled steel sheet to decarburization annealing to obtain a decarburization-annealed steel sheet;
   a separator applying step of applying an annealing separator containing MgO, Al₂O₃, and a chloride to a surface of the decarburization-annealed steel sheet;
   a finish annealing step of subjecting the decarburization-annealed steel sheet coated with the annealing separator to finish annealing to obtain a finish-annealed sheet;
   a surface treatment step of pickling a surface of the finish-annealed sheet to obtain a surface-treated steel sheet;
   a thermal oxidation-reduction annealing step of subjecting the surface-treated steel sheet to two-stage annealing to obtain a reduction annealed steel sheet; and
   a tension-applying insulating coating forming step of forming a tension-applying insulating coating containing a phosphate and silica on a surface of the reduction annealed steel sheet, in which
   the thermal oxidation-reduction annealing step includes
   a primary temperature rising process of heating the surface-treated steel sheet after the surface treatment step to raise the temperature of the surface-treated steel sheet,
   a primary annealing process performed subsequent to the primary temperature rising process in which a steel sheet temperature is held at a constant temperature in a range of 800°C to 900°C for a constant holding time in a range of 10 seconds to 200 seconds in an atmosphere having a constant value in a range of an oxygen potential PH₂O/PH₂ of 0.10 to 10.00, and
   a secondary annealing process performed after the primary annealing process in which the steel sheet temperature is held at a constant temperature in a range of 900°C to 1100°C for a constant holding time in a range of 3 seconds to 100 seconds in an atmosphere where an oxygen potential PH₂O/PH₂ is constant and less than 0.1000 and a dew point is constant and less than -20°C.
(2) In the method for manufacturing a grain-oriented electrical steel sheet described in (1), in the annealing separator, the amount of MgO may be 0.0 mass% or more and 79.5 mass% or less, the amount of Al₂O₃ may be 20.0 mass% or more and 99.5 mass% or less, and the balance may be the chloride.
(3) In the method for manufacturing a grain-oriented electrical steel sheet described in (1), in the primary temperature rising process,
   the oxygen potential PH₂O/PH₂ at a steel sheet temperature of 100°C to 800°C may be 0.5000 or less, and
   the average temperature rising rate at a steel sheet temperature of 550°C to 800°C may be 100°C/s to 2000°C/s.
(4) In the method for manufacturing a grain-oriented electrical steel sheet described in (2), in the primary temperature rising process,
   the oxygen potential PH₂O/PH₂ at a steel sheet temperature of 100°C to 800°C may be 0.5000 or less, and
   the average temperature rising rate at a steel sheet temperature of 550°C to 800°C may be 100°C/s to 2000°C/s.
(5) The method for manufacturing a grain-oriented electrical steel sheet described in any one of (1) to (4) may further include a nitridation annealing step of nitridation annealing the decarburization-annealed steel sheet after the decarburization annealing step and before the separator applying step.
(6) In the method for manufacturing a grain-oriented electrical steel sheet described in any one of (1) to (4), in the surface treatment step, the finish-annealed sheet may be immersed in a first treatment solution containing at least one of hydrochloric acid, sulfuric acid, nitric acid, and phosphoric acid, a total acid concentration of 0.1 vol% to 20.0 vol%, and a solution temperature of 50°C to 90°C for 3 seconds to 60 seconds to obtain the surface-treated steel sheet.
(7) In the method for manufacturing a grain-oriented electrical steel sheet described in (5), in the surface treatment step, the finish-annealed sheet may be immersed in a first treatment solution containing at least one of hydrochloric acid, sulfuric acid, nitric acid, and phosphoric acid, a total acid concentration of 0.1 vol% to 20.0 vol%, and a solution temperature of 50°C to 90°C for 3 seconds to 60 seconds to obtain the surface-treated steel sheet.
(8) In the method for manufacturing a grain-oriented electrical steel sheet described in any one of (1) to (7), the slab may include, as a chemical composition, by mass%, at least one selected from the group consisting of:
   Bi: more than 0.0000% and 0.0200% or less,
   P: more than 0.000% and 0.100% or less,
   Sn: more than 0.00% and 0.50% or less,
   Cu: more than 0.00% and 0.50% or less,
   Cr: more than 0.00% and 0.50% or less,
   Sb: more than 0.00% and 0.20% or less,
   Mo: more than 0.00% and 0.10% or less,
   Nb: more than 0.0000% and 0.0200% or less,
   B: more than 0.0000% and 0.0200% or less,
   Te: more than 0.0000% and 0.0200% or less,
   Ni: more than 0.00% and 0.20% or less, and
   Se: more than 0.0000% and 0.0200% or less.

### Advantageous Effects of Invention

According to each aspect of the present invention, it is possible to manufacture a grain-oriented electrical steel sheet having higher coating adhesion without impairing magnetic characteristics.

### BRIEF DESCRIPTION OF DRAWINGS

[FIG. 1] A schematic cross-sectional view of a grain-oriented electrical steel sheet obtained by a method for manufacturing a grain-oriented electrical steel sheet according to an embodiment of the present invention.
[FIG. 2] A flowchart illustrating the method for manufacturing a grain-oriented electrical steel sheet according to the embodiment.
[FIG. 3] A view describing a thermal oxidation-reduction annealing step in the manufacturing method, where a horizontal axis represents time and a vertical axis represents an annealing temperature (base steel sheet temperature).

### DESCRIPTION OF EMBODIMENTS

A method for manufacturing a grain-oriented electrical steel sheet according to an embodiment of the present invention will be described below. However, the present invention is not limited only to the configuration and steps disclosed in the present embodiment, and various modifications can be made without departing from the gist of the present invention. In addition, a numerical limitation range described below includes the lower limit and the upper limit within the range. On the other hand, a numerical value indicated as "more than" or "less than" is not included in the numerical value range. In addition, unless otherwise specified, the unit "%" regarding the chemical component means "mass%".

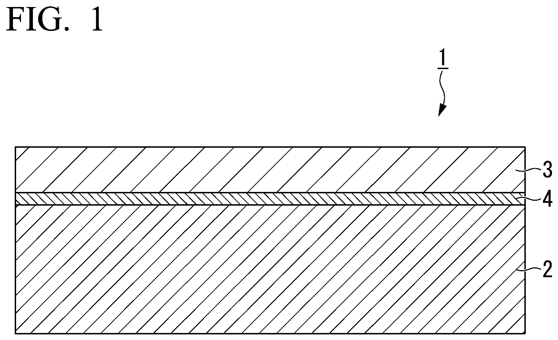

FIG. 1 is a schematic cross-sectional view of a grain-oriented electrical steel sheet (grain-oriented electrical steel according to the present embodiment) obtained by the method for manufacturing a grain-oriented electrical steel sheet according to the present embodiment. As illustrated in FIG. 1, a grain-oriented electrical steel sheet 1 according to the present embodiment includes a base steel sheet 2 and a secondary coating 3 as an insulating coating (tension-applying insulating coating) disposed on a surface of the base steel sheet 2 when viewing a cross section whose cutting direction is parallel to a sheet thickness direction. At the interface between the base steel sheet 2 and the secondary coating 3, only an oxide layer 4 containing a Fe-P-O compound is formed, and substantially no glass coating (hereinafter, also referred to as "primary coating") is present.

The average sheet thickness of the base steel sheet 2 can be, for example, 0.17 mm to 0.29 mm. In addition, the average film thickness of the secondary coating 3 can be, for example, 1 µm to 6 µm.

In order to improve the iron loss characteristics, it is effective to smooth the surface of the base steel sheet 2 to facilitate magnetic domain wall motion. In addition, it is effective to bring the base steel sheet 2 and the secondary coating 3 into close contact with each other, to apply tension to the base steel sheet 2, and to secure electrical insulation properties between a plurality of grain-oriented electrical steel sheets 1 superposed on each other. In the grain-oriented electrical steel sheet 1 according to the present embodiment, the secondary coating 3 is disposed in contact with the base steel sheet 2 (there is not primary coating) so that the surface smoothness of the base steel sheet 2 is secured. In addition, as described in the manufacturing method described later, the Fe-P-O compound is formed at the interface between the base steel sheet 2 and the secondary coating 3 by precisely controlling the atmosphere conditions, the soaking temperature, the holding time of the soaking temperature, and the like in each process of the thermal oxidation-reduction annealing step performed in two stages, thereby ensuring the adhesion of the secondary coating 3. Therefore, the grain-oriented electrical steel sheet 1 according to the present embodiment is excellent in iron loss characteristics and coating adhesion.

In the Fe-P-O compound, Fe is derived from the base metal component of the base steel sheet 2, and P is derived from a secondary coating chemical solution. Fe ions diffuse from the base metal side toward the coating side, while P ions diffuse and concentrate from the coating side toward the base metal side. When the Fe ion and the P ion are associated with each other, a chemical bond is generated, and as a result, a Fe-P-O compound is generated. That is, as a result of chemical bonding between the ions in the coating and the base metal (as a result of adhesion of the coating to the base metal), the Fe-P-O compound is observed at the interface between the coating and the base metal.

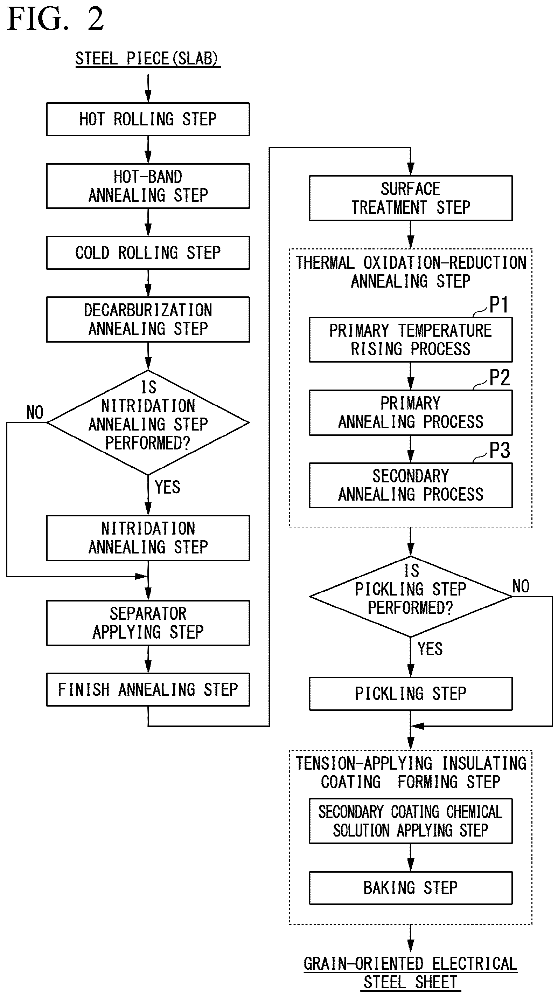

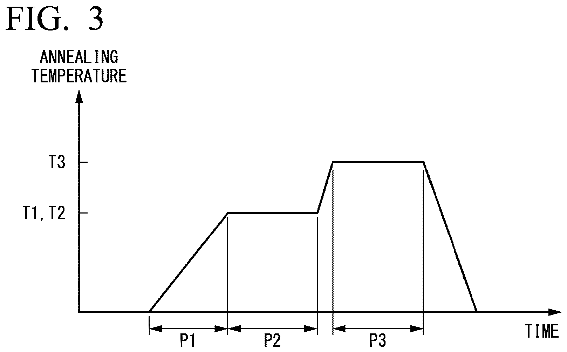

Next, the method for manufacturing a grain-oriented electrical steel sheet according to the present embodiment will be described with reference to FIGS. 2 and 3. The following manufacturing method is an example, and an appropriate change may be added as long as it does not affect the formation of the Fe-P-O compound. FIG. 2 is a flowchart illustrating the method for manufacturing a grain-oriented electrical steel sheet according to the present embodiment. FIG. 3 is a view describing a thermal oxidation-reduction annealing step in the manufacturing method, where a horizontal axis represents time and a vertical axis represents an annealing temperature (base steel sheet temperature).

The method for manufacturing a grain-oriented electrical steel sheet according to the present embodiment mainly includes a hot rolling step of heating a slab (steel piece) having a predetermined chemical composition and performing hot rolling to obtain a hot-rolled steel sheet, a hot-band annealing step of subjecting the hot-rolled steel sheet to hot-band annealing to obtain a hot-band annealed sheet and then immersing (pickling) the hot-band annealed sheet in a pickling solution, a cold rolling step of subjecting the hot-band annealed sheet to cold rolling to obtain a cold-rolled steel sheet, a decarburization annealing step of subjecting the cold-rolled steel sheet to decarburization annealing to obtain a decarburization-annealed steel sheet, a separator applying step of applying an annealing separator to a surface of the decarburization-annealed steel sheet, a finish annealing step of subjecting the decarburization-annealed steel sheet coated with the annealing separator to finish annealing to obtain a finish-annealed sheet, a surface treatment step of pickling a surface of the finish-annealed sheet to obtain a surface-treated steel sheet, a thermal oxidation-reduction annealing step of subjecting the surface-treated steel sheet by two-stage annealing after the surface treatment step to obtain a reduction annealed steel sheet, and a tension-applying insulating coating forming step of forming a tension-applying insulating coating containing a phosphate and silica on a surface of the reduction annealed steel sheet after the thermal oxidation-reduction annealing step. Then, as necessary, a nitridation annealing step is included after the decarburization annealing step and before the separator applying step. Further, as necessary, a pickling step is included after the thermal oxidation-reduction annealing step and before the tension-applying insulating coating forming step.

The thermal oxidation-reduction annealing step includes a primary temperature rising process, a primary annealing process, and a secondary annealing process. The tension-applying insulating coating forming step includes a secondary coating chemical solution applying step and a baking step.

Details of each of the above steps will be described below. In the following description, in a case where the conditions of each step are not described, it is sufficient if known conditions are appropriately applied.

### [Hot Rolling Step]

In the hot rolling step, a steel piece (for example, a steel ingot such as a slab) having a predetermined chemical composition is hot rolled. For example, the slab (steel piece) subjected to the hot rolling step may include, as a chemical composition, by mass%,
C: 0.020% to 0.150%,
Si: 3.00% to 4.00%,
Mn: 0.01% to 0.50%,
S: 0.0010% to 0.0400%,
acid-soluble Al: 0.010% to 0.050%,
N: 0.002% to 0.020%,
Bi: 0.0000 to %0.0200%,
P: 0.000% to 0.100%,
Sn: 0.00% to 0.50%,
Cu: 0.00% to 0.50%,
Cr: 0.00% to 0.50%,
Sb: 0.00% to 0.20%,
Mo: 0.00% to 0.10%,
Nb: 0.0000% to 0.0200%,
B: 0.0000% to 0.0200%,
Te: 0.0000% to 0.0200%,
Ni: 0.00% to 0.20%,
Se: 0.0000% to 0.0200%, and
a balance being Fe and impurities.

In addition, the slab (steel piece) may include, as a chemical composition, by mass%, at least one selected from the group consisting of:
Bi: more than 0.0000% and 0.0200% or less,
P: more than 0.000% and 0.100% or less,
Sn: more than 0.00% and 0.50% or less,
Cu: more than 0.00% and 0.50% or less,
Cr: more than 0.00% and 0.50% or less,
Sb: more than 0.00% and 0.20% or less,
Mo: more than 0.00% and 0.10% or less,
Nb: more than 0.0000% and 0.0200% or less,
B: more than 0.0000% and 0.0200% or less,
Te: more than 0.0000% and 0.0200% or less,
Ni: more than 0.00% and 0.20% or less, and
Se: more than 0.0000% and 0.0200% or less.

### C: 0.020% to 0.150%

C (carbon) is a basic element for the steel piece (slab). C is included for the purpose of increasing the development degree of the Goss orientation in secondary recrystallization. The C content necessary for improving magnetic characteristics is 0.020% or more, preferably 0.040% or more, and more preferably 0.050% or more as a slab. However, excessive residual of C in a final product may be a factor of iron loss deterioration. Therefore, it is necessary to perform the decarburization treatment in the decarburization annealing step, but when C is contained in the slab in an amount exceeding 0.150%, the decarburization treatment becomes difficult. The C content is 0.150% or less, preferably 0.120% or less, and more preferably 0.100% or less as a slab.

### Si: 3.00% to 4.00%

Si (silicon) is a basic element for the steel piece (slab). When the Si content is less than 3.00%, the eddy-current loss cannot be sufficiently reduced, so that favorable magnetic characteristics cannot be obtained. Therefore, the Si content is 3.00% or more. The Si content is preferably 3.10% or more, and more preferably 3.20% or more. On the other hand, when the Si content is more than 4.00%, the steel sheet is embrittled, and the passability is remarkably deteriorated during manufacture, and thus the Si content is 4.00% or less. The Si content is preferably 3.80% or less, and more preferably 3.60% or less.

### Mn: 0.01% to 0.50%

Mn (manganese) is a basic element for the steel piece (slab). When the Mn content is less than 0.01%, MnS (MnSe in the case of using Se as a part of S) functioning as an inhibitor is hardly formed, secondary recrystallization does not sufficiently proceed, and favorable magnetic characteristics cannot be obtained. Therefore, the Mn content is 0.01% or more. The Mn content is preferably 0.03% or more, and more preferably 0.06% or more. On the other hand, when the Mn content is more than 0.50%, the steel undergoes phase transformation during finish annealing, secondary recrystallization does not sufficiently proceed, and favorable magnetic characteristics cannot be obtained, and therefore the Mn content is 0.50% or less. The Mn content is preferably 0.30% or less, and more preferably 0.20% or less.

### S: 0.0010% to 0.0400%

### Se: 0.0000% to 0.0200%

S (sulfur) is a basic element for the steel piece (slab). S is an element that forms MnS, which is an inhibitor. The S content is 0.0010% or more, preferably 0.0100% or more, and more preferably 0.0150% or more as a slab. On the other hand, as a slab, the S content exceeding 0.0400% is a cause of hot embrittlement, and hot rolling may be difficult. The S content is 0.0400% or less, preferably 0.0350% or less, and more preferably 0.0300% or less as a slab. Excessive residual of S in a final product may also be a cause of magnetism deterioration. Therefore, S also needs to be removed (purified) from the base steel sheet during finish annealing.

Since Se (selenium) is also an element that forms MnSe, Se may be used as a part of S (the Se content may be more than 0.0000%). When Se is excessively present, secondary recrystallization becomes unstable, which may cause magnetism deterioration. Therefore, the Se content needs to be 0.0000% or more and 0.0200% or less. The Se content is preferably 0.0000% or more and 0.0150% or less, and more preferably 0.0000% or more and 0.0100% or less.

### Acid-Soluble Al: 0.010% to 0.050%

Acid-soluble Al (aluminum) (sol.Al) is a basic element for the steel piece (slab). Acid-soluble Al is an element necessary for forming AlN as an inhibitor and increasing the magnetic characteristics. The acid-soluble Al content is 0.010% or more, preferably 0.015% or more, and more preferably 0.020% or more as a slab. On the other hand, when acid-soluble Al is excessively contained in the slab, embrittlement may be remarkable. The acid-soluble Al content is 0.050% or less, preferably 0.040% or less, and more preferably 0.030% or less as a slab. Similarly to N, acid-soluble Al needs to be removed (purified) from the base steel sheet during finish annealing.

### N: 0.002% to 0.020%

N (nitrogen) is a basic element for the steel piece (slab). N is an element necessary for forming AlN as an inhibitor and increasing the development degree of the Goss orientation during secondary recrystallization. The N content necessary for inhibitor formation is 0.002% or more, preferably 0.004% or more, and more preferably 0.006% or more as a slab. On the other hand, as a slab, when the N content is more than 0.020%, blisters (pores) are generated in the steel sheet during cold rolling, the strength of the steel sheet increases, and passability during manufacture may be deteriorated. The N content is 0.020% or less, preferably 0.015% or less, and more preferably 0.010% or less as a slab. Similarly to C, excessive residual of N in a final product may be a cause of magnetism deterioration. Therefore, N needs to be purified at the time of finish annealing.

### P: 0.000% to 0.100%

P (phosphorus) is an optional element for the steel piece (slab). When the P content is more than 0.100%, the workability of the steel sheet may be significantly deteriorated. Therefore, the P content may be 0.100% or less. The P content is preferably 0.070% or less, and more preferably 0.030% or less. On the other hand, the lower limit of the P content is not particularly limited, and may be 0.000%. However, since P has an effect of improving the texture and improving the magnetic characteristics of the steel sheet, the P content may be more than 0.000% or 0.005% or more.

### Bi: 0.0000% to 0.0200%

Bi (bismuth) is an optional element for the steel piece (slab). When the Bi content is more than 0.0200%, the passability during cold rolling may be deteriorated. In addition, when the purification at the time of the finish annealing is insufficient and Bi remains excessively, the magnetic characteristics may be adversely affected. Therefore, the Bi content may be 0.0020% or less. The Bi content is preferably 0.0150% or less, and more preferably 0.0100% or less. On the other hand, the lower limit of the Bi content is not particularly limited, and may be 0.0000%. However, since Bi has an effect of improving magnetic characteristics, the Bi content may be more than 0.0000% or 0.0005% or more.

### Sn: 0.00% to 0.50%

Sn (tin) is an optional element for the steel piece (slab). When the Sn content is more than 0.50%, secondary recrystallization becomes unstable, and magnetic characteristics may be adversely affected. Therefore, the Sn content may be 0.50% or less. The Sn content is preferably 0.40% or less, and more preferably 0.30% or less. On the other hand, the lower limit of the Sn content is not particularly limited, and may be 0.00%. However, since Sn has an effect of improving magnetic characteristics by increasing the development degree of the Goss orientation, the Sn content may be more than 0.00%, 0.01% or more, or 0.03% or more.

### Cu: 0.00% to 0.50%

Cu (copper) is an optional element for the steel piece (slab). When the Cu content exceeds 0.50%, the steel sheet may be embrittled during hot rolling. Therefore, the Cu content may be 0.50% or less. The Cu content is preferably 0.40% or less, and more preferably 0.30% or less. On the other hand, the lower limit of the Cu content is not particularly limited, and may be 0.00%. However, since Cu has an effect of improving magnetic characteristics by increasing the development degree of the Goss orientation, the Cu content may be more than 0.00%, 0.01% or more, or 0.03% or more.

### Cr: 0.00% to 0.50%

Cr (chromium) is an optional element for the steel piece (slab). When the Cr content is more than 0.50%, a Cr oxide is formed, and magnetic characteristics may be adversely affected. Therefore, the Cr content may be 0.50% or less. The Cr content is preferably 0.40% or less, and more preferably 0.30% or less. On the other hand, the lower limit of the Cr content is not particularly limited, and may be 0.00%. However, since Cr has an effect of improving magnetic characteristics by increasing the development degree of the Goss orientation, the Cr content may be more than 0.00%, 0.01% or more, or 0.03% or more.

### Sb: 0.00% to 0.20%

Sb (antimony) is an optional element for the steel piece (slab). When the Sb content is more than 0.20%, magnetic characteristics may be adversely affected. Therefore, the Sb content may be 0.20% or less. The Sb content is preferably 0.15% or less, and more preferably 0.10% or less. On the other hand, the lower limit of the Sb content is not particularly limited, and may be 0.00%. However, since Sb functions as an inhibitor and has an effect of stabilizing secondary recrystallization, the Sb content may be more than 0.00% or 0.01% or more.

### Mo: 0.00% to 0.10%

Mo (molybdenum) is an optional element for the steel piece (slab). When the Mo content is more than 0.10%, a problem may occur in the rollability of the steel sheet. Therefore, the Mo content may be 0.10% or less. The Mo content is preferably 0.05% or less, and more preferably 0.03% or less. On the other hand, the lower limit of the Mo content is not particularly limited, and may be 0.00%. However, since Mo has an effect of improving magnetic characteristics by increasing the development degree of the Goss orientation, the Mo content may be more than 0.00% or 0.01% or more.

### Nb: 0.0000% to 0.0200%

Nb (niobium) is an optional element for the steel piece (slab). When the Nb content is more than 0.0200%, secondary recrystallization may become unstable. Therefore, the Nb content may be 0.0200% or less. The Nb content is preferably 0.0100% or less, and more preferably 0.0050% or less. On the other hand, the lower limit of the Nb content is not particularly limited, and may be 0.0000%. However, since Nb has an action of stabilizing secondary recrystallization, the Nb content may be more than 0.0000% or 0.0005% or more.

### B: 0.0000% to 0.0200%

B (boron) is an optional element for the steel piece (slab). When the B content is more than 0.0200%, secondary recrystallization may become unstable. Therefore, the B content may be 0.0200% or less. The B content is preferably 0.0100% or less, and more preferably 0.0050% or less. On the other hand, the lower limit of the B content is not particularly limited, and may be 0.0000%. However, since B has an action of stabilizing secondary recrystallization, the B content may be more than 0.0000% or 0.0005% or more.

### Te: 0.0000% to 0.0200%

Te (tellurium) is an optional element for the steel piece (slab). When the Te content is more than 0.0200%, fracture may occur during hot rolling or cold rolling. Therefore, the Te content may be 0.0200% or less. The Te content is preferably 0.0150% or less, and more preferably 0.0100% or less. On the other hand, the lower limit of the Te content is not particularly limited, and may be 0.0000%. However, since Te has an action of stabilizing secondary recrystallization, the Te content may be more than 0.0000% or 0.0005% or more.

### Ni: 0.00% to 0.20%

Ni (nickel) is an optional element for the steel piece (slab). Ni is an effective element that affects crystal orientation rotation occurring during cold rolling and obtains a favorable texture for secondary recrystallization. Ni is also an element effective for increasing the specific resistance of the steel sheet and reducing the iron loss. Thus, Ni may be contained. When Ni is contained, the Ni content is preferably 0.01% or more in order to obtain these effects.

On the other hand, when the Ni content is more than 0.20%, secondary recrystallization may become unstable. Thus, when contained, the Ni content is 0.20% or less. The Ni content is preferably 0.15% or less, and more preferably 0.10% or less.

The steel piece (slab) subjected to the hot rolling step may contain impurities. The "impurities" means those mixed from ore as a raw material, scrap, a manufacturing environment, or the like when the steel is industrially manufactured.

The chemical composition of the steel piece (slab) subjected to the hot rolling step may be measured by a general analysis method. For example, the chemical composition may be measured using inductively coupled plasma-atomic emission spectrometry (ICP-AES). It is sufficient if acid-soluble Al is measured by the ICP-AES using a filtrate after a sample is thermally decomposed with acid. C and S may be measured by a combustion-infrared absorption method, and N may be measured by an inert gas fusion-thermal conductivity method.

In the hot rolling step, first, the steel piece is heat-treated. The heating temperature may be, for example, 1200°C or higher and 1600°C or lower. The lower limit of the heating temperature is preferably 1280°C, and the upper limit of the heating temperature is preferably 1500°C. The heated steel piece is then hot rolled. The sheet thickness of the hot-rolled steel sheet after the hot rolling is preferably, for example, in a range of 2.0 mm or more and 3.0 mm or less.

### [Hot-Band Annealing Step]

In the hot-band annealing step, the hot-rolled steel sheet obtained in the hot rolling step is annealed. By performing the hot-band annealing, recrystallization occurs in the steel sheet, and finally favorable magnetic characteristics can be achieved. The conditions of the hot-band annealing are not particularly limited, but for example, it is sufficient if the hot-rolled steel sheet is annealed in a temperature range of 900°C to 1200°C for 10 seconds to 5 minutes.

After the hot-band annealing, pickling is continuously performed. In this pickling, the surface of the hot-rolled steel sheet after the hot-band annealing is immersed in a pickling solution to be pickled, thereby obtaining a hot-band annealed sheet.

### [Cold Rolling Step]

In the cold rolling step, the hot-band annealed sheet after the hot-band annealing step is subjected to one time cold rolling or a plurality of times of cold rolling with intermediate annealing interposed therebetween. As used herein, "once" means that cold rolling or intermediate annealing of one pass or more passes is performed once. When the intermediate annealing is performed during the cold rolling, the heating method of the intermediate annealing is not particularly limited. In addition, the cold rolling may be performed three or more times including intermediate annealing, but since the manufacturing cost increases, it is preferable to perform the cold rolling once or twice.

It is sufficient if the final cold rolling reduction (cumulative cold rolling ratio without intermediate annealing or cumulative cold rolling ratio after intermediate annealing) in the cold rolling is, for example, in a range of 80% or more and 95% or less. By setting the final cold rolling reduction within the above range, the development degree in the {110} <001> orientation can be finally increased, and destabilization of secondary recrystallization can be suppressed. The sheet thickness of the cold-rolled steel sheet subjected to the cold rolling is usually the sheet thickness (final sheet thickness) of the base steel sheet of the grain-oriented electrical steel sheet to be finally manufactured. The sheet thickness of the cold-rolled steel sheet after the cold rolling is preferably, for example, in a range of 0.17 mm or more and 0.29 mm or less.

### [Decarburization Annealing Step]

In the decarburization annealing step, the cold-rolled steel sheet obtained in the cold rolling step is decarburization-annealed. By this decarburization annealing, C contained in the cold-rolled steel sheet is removed, and primary recrystallization occurs. The decarburization annealing is preferably performed in a wet atmosphere in order to remove C contained in the cold-rolled steel sheet, and for example, it is sufficient if annealing is performed in a wet atmosphere in a temperature range of 700°C to 1000°C for 10 seconds to 10 minutes.

### [Nitridation Annealing Step]

As necessary, after the decarburization annealing step and before the separator applying step, a nitridation annealing step of nitridation annealing the decarburization-annealed steel sheet may be performed to obtain a nitriding-treated steel sheet. In this nitridation annealing step, for example, the decarburization-annealed steel sheet after the decarburization annealing is subjected to annealing in a temperature range of 700°C to 850°C for 10 seconds to 60 seconds in an atmosphere containing a gas having nitriding ability such as hydrogen, nitrogen, and ammonia. When the nitridation annealing step is performed, an increase in amount of AlN as an inhibitor leads to an advantage that secondary recrystallization is stabilized and magnetism is improved.

### [Separator Applying Step]

In the separator applying step, in order to prevent the coiled steel sheet from being baked during the subsequent finish annealing step, an annealing separator is applied to the decarburization-annealed steel sheet obtained in the decarburization annealing step and dried before the finish annealing step.

The annealing separator contains a magnesia (MgO), an alumina (Al₂O₃), and a chloride. Here, it is preferable that each component in the annealing separator has a total amount of MgO and Al₂O₃ of 80.0 mass% or more and 99.5 mass% or less in terms of solid content, and the balance is chloride. That is, the amount of the chloride in the annealing separator is a value obtained by subtracting the total amount of MgO and Al₂O₃ from 100 mass%, and is preferably 0.5 mass% or more and 20 mass% or less. The balance may include impurities.

In the annealing separator, the content that can be taken as MgO alone is preferably 0.0 mass% or more and 79.5 mass% or less, and the content that can be taken as Al₂O₃ alone is preferably 20.0 mass% or more and 99.5 mass% or less.

The total amount of MgO and Al₂O₃ is more preferably 85.0 mass% or more, and still more preferably 90.0 mass% or more. The total amount of MgO and Al₂O₃ is more preferably 99.0 mass% or less, and still more preferably 95.0 mass% or less.

On the other hand, the amount of the chloride as the balance is more preferably 1.0 mass% or more and still more preferably 5.0 mass% or more. The amount of the chloride as the balance is more preferably 15.0 mass% or less and still more preferably 10.0 mass% or less.

Although the chloride is not particularly specified, for example, bismuth oxychloride (BiOCl), bismuth trichloride (BiCl₃), calcium chloride, iron chloride, cobalt chloride, nickel chloride, and the like can be considered.

### [Finish Annealing Step]

In the finish annealing step subsequent to the separator applying step, the decarburization-annealed steel sheet coated with the annealing separator in advance is subjected to finish annealing. The finish annealing is performed for a long time in a state where the steel sheet is wound in a coil shape.

The annealing conditions of the finish annealing are not particularly limited, and it is sufficient if known conditions are appropriately adopted. For example, in the finish annealing, it is sufficient if the decarburization-annealed steel sheet to which the annealing separator is applied and dried is held in a temperature range of 1000°C or more and 1300°C or less for 10 hours or more and 60 hours or less. It is sufficient if the atmosphere at the time of the finish annealing is, for example, a nitrogen atmosphere or a mixed atmosphere of nitrogen and hydrogen. In addition, after the finish annealing, the surface of the finish-annealed sheet may be washed to perform powder removal.

By this finish annealing, secondary recrystallization occurs in the steel sheet, and the crystal orientation is oriented to the {110}<001> orientation. In this secondary recrystallization structure, the magnetization easy axes are aligned in the rolling direction, and the grains are coarse. Due to this secondary recrystallization structure, excellent magnetic characteristics can be obtained. In the present embodiment, since the annealing separator contains a chloride, the formation of the primary coating is suppressed, and the surface of the finish-annealed sheet becomes smooth.

In addition, the atmosphere at the time of the finish annealing may be changed to a hydrogen atmosphere to perform a purification treatment. By this purification treatment, elements such as Al, N, and S (also including Se in the case of using Se as a part of S) contained in the steel sheet as a steel composition are discharged to the outside of the system, and the steel sheet is purified.

### [Surface Treatment Step]

In this step, the surface of the finish-annealed sheet obtained in the finish annealing step is pickled to obtain a surface-treated steel sheet. The pickling conditions at this time are not particularly specified, but for example, it is sufficient if the finish-annealed sheet is immersed in an acid (first treatment solution) having a specific concentration. It is sufficient if the first treatment solution contains at least one of a hydrochloric acid, a sulfuric acid, a nitric acid, and a phosphoric acid, and has a total acid concentration of 0.1 vol% to 20.0 vol% and a solution temperature of 50°C to 90°C. It is sufficient if the surface treatment of the finish-annealed sheet is performed for 3 seconds to 60 seconds using the first treatment solution.

In this step, the surface of the finish-annealed sheet is brought into an active surface state, but on the other hand, it is preferable to perform the surface treatment under a condition that etch pits are not formed on the surface of the finish-annealed sheet. Therefore, it is sufficient if each of the above conditions is controlled in a complex and inseparable manner. For example, when the pickling strength is increased for some conditions among the above conditions, it is sufficient if the active state of the surface and the smooth state of the surface are compatible by changing the pickling strength so as to be weakened for the other conditions among the above conditions. Since those skilled in the art can execute surface control including pickling behavior, it is possible to control the surface state by combining the above conditions in consideration of the effect of the above conditions on the pickling strength.

When the total acid concentration of the first treatment solution is less than 0.1 vol%, it is difficult to bring the surface of the finish-annealed sheet into an active surface state, and an internally oxidized SiO₂ is hardly formed in the next thermal oxidation-reduction annealing step. The total acid concentration is preferably 1.0 vol% or more. On the other hand, when the total acid concentration of the first treatment solution is more than 20.0 vol%, etch pits are likely to be formed on the surface of the finish-annealed sheet. Similarly, when the solution temperature of the first treatment solution is lower than 50°C, an active surface state cannot be obtained, and when the solution temperature of the first treatment solution is higher than 90°C, etch pits are likely to be formed. Similarly, when the treatment time of the surface treatment is less than 3 seconds, an active surface state cannot be obtained, and when the treatment time of the surface treatment is more than 60 seconds, etch pits are likely to be formed.

### [Thermal Oxidation-Reduction Annealing Step]

In the thermal oxidation-reduction annealing step, a heat treatment of subjecting the surface-treated steel sheet after the surface treatment step to two-stage annealing corresponding to thermal oxidation annealing and reduction annealing is performed. As illustrated in FIGS. 2 and 3, the thermal oxidation-reduction annealing step of the present embodiment includes a primary temperature rising process P1, a primary annealing process P2 (first stage), and a secondary annealing process P3 (second stage). As described above, the thermal oxidation-reduction annealing step of the present embodiment is particularly characterized in that a soaking treatment is performed by two-stage heating instead of the conventional one-stage heating.

### <Primary Temperature Rising Process P1>

In the primary temperature rising process P1, after the surface treatment step and before the subsequent primary annealing process P2, the surface-treated steel sheet is heated to raise the temperature from room temperature to a heating achieving temperature T1. Specifically, the heating achieving temperature T1 is selected from a range of 800°C to 950°C. When the heating achieving temperature T1 is lower than 800°C, a SiO₂ oxide film (oxide film mainly composed of SiO₂) is hardly formed. Therefore, the heating achieving temperature T1 is 800°C or higher. The heating achieving temperature T1 is preferably 820°C or higher, and more preferably 840°C or higher. On the other hand, when the heating achieving temperature T1 is more than 950°C, an internally oxidized SiO₂ is not formed, and the entire sheet surface is likely to be excessively oxidized. Therefore, the heating achieving temperature T1 is 950°C or lower. The heating achieving temperature T1 is preferably 920°C or lower and more preferably 900°C or lower.

In this primary temperature rising process P1, it is preferable to control the atmosphere dew point at a steel sheet temperature of 100°C to 800°C to 0°C or lower. In addition, the oxygen potential PH₂O/PH₂ defined by a ratio of water vapor partial pressure PH₂O and hydrogen partial pressure PH₂ in the atmosphere is preferably 0.5000 or less.

When the oxygen potential PH₂O/PH₂ is more than 0.5000, it is difficult to form a SiO₂ oxide film. There, the oxygen potential PH₂O/PH₂ is preferably 0.5000 or less. The oxygen potential PH₂O/PH₂ is more preferably 0.4000 or less and still more preferably 0.3000 or less. The oxygen potential PH₂O/PH₂ is preferably 0.0001 or more from the viewpoint of securing a uniform SiO₂ oxide film. The oxygen potential PH₂O/PH₂ is more preferably 0.0010 or more and still more preferably 0.0050 or more.

In addition, in this primary temperature rising process P1, it is preferable to control the average temperature rising rate at a steel sheet temperature of 550°C to 800°C to a range of 100°C/s to 2000°C/s.

When the average temperature rising rate is less than 100°C/s, there is a concern that an oxide film other than SiO₂, such as Fe₂SiO₄, is generated. The average temperature rising rate is more preferably 150°C/s or more and still more preferably 200°C/s or more. On the other hand, when the average temperature rising rate is more than 2000°C/s, the generation of SiO₂ itself decreases, and it is difficult to enjoy the effect of improving the coating adhesion. Therefore, the average temperature rising rate is preferably 2000°C/s. The average temperature rising rate is more preferably 1800°C/s or less and still more preferably 1600°C/s or less.

By controlling the heating condition to the above condition, a homogeneous SiO₂ oxide film is preferably formed on the surface in the steel sheet. That is, Si on the sheet surface reacts with O₂ in the atmosphere to form a SiO₂ oxide film, and by performing the above control, a SiO₂ oxide film having a uniform film thickness can be uniformly formed on the sheet surface over the entire surface. A uniform SiO₂ oxide film has an effect of stabilizing the steel sheet oxidation behavior in the subsequent primary annealing process P2, and contributes to improvement in coating adhesion.

In order to control the average temperature rising rate in a narrow temperature range of 550°C to 800°C in a pinpoint manner, special equipment is required. Therefore, the control start time of the average temperature rising rate of the steel sheet may be set to a relatively low temperature range of about 100°C. However, also in this case, the average temperature rising rate at 550°C to 800°C is set to 100°C/s to 2000°C/s. This makes it possible to sufficiently form an internally oxidized SiO₂ on the surface of the base steel sheet without requiring special equipment.

### <Primary Annealing Process P2>

The primary annealing process P2 is performed subsequent to the primary temperature rising process P1. In this primary annealing process P2, the steel sheet temperature is held at an annealing temperature T2 for a constant holding time in a range of 10 seconds to 200 seconds in an atmosphere having a constant value in a range of an oxygen potential PH₂O/PH₂ of 0.10 to 10.00. The annealing temperature T2 is a constant temperature in a range of 800°C to 900°C.

When the oxygen potential PH₂O/PH₂ is less than 0.10, Fe₂SiO₄ is not deposited in some cases. Fe₂SiO₄ is reduced to pure iron, which is useful for coating adhesion, by the subsequent secondary annealing process P3. That is, a situation in which Fe₂SiO₄ cannot be deposited in the primary annealing process P2 leads to deterioration of coating adhesion. Therefore, the lower limit of the oxygen potential PH₂O/PH₂ is 0.10. The lower limit of the oxygen potential PH₂O/PH₂ is preferably 0.15 and more preferably 0.20.

On the other hand, when the oxygen potential PH₂O/PH₂ is more than 10.00, an amount of Fe oxide that cannot be completely reduced may be deposited in the subsequent secondary annealing P3. Therefore, the upper limit of the oxygen potential PH₂O/PH₂ is 10.00. The oxygen potential PH₂O/PH₂ is preferably 1.00 or less and more preferably 0.60 or less.

When the annealing temperature T2 is lower than 800°C, Fe₂SiO₄ is not sufficiently generated, which may lead to deterioration of coating adhesion. Therefore, the annealing temperature T2 is 800°C or higher.

On the other hand, when the annealing temperature T2 is higher than 900°C, Fe₂SiO₄ is excessively generated, which may lead to deterioration of coating adhesion. Therefore, the annealing temperature T2 is 900°C or lower. The annealing temperature T2 is more preferably 880°C or lower and still more preferably 850°C or lower.

When the holding time is less than 10 seconds, Fe₂SiO₄ is not sufficiently generated, and coating adhesion may be deteriorated. Therefore, the holding time is set to 10 seconds or more. The holding time is preferably 30 seconds or more and more preferably 50 seconds or more.

Conversely, when the holding time is more than 200 seconds, Fe₂SiO₄ is excessively generated, and the coating adhesion may be deteriorated. Therefore, the holding time is set to 200 seconds or less. The holding time is preferably 180 seconds or less and more preferably 150 seconds or less.

By controlling the soaking conditions to the conditions described above, the SiO₂ oxide film generated in the primary temperature rising process P1 and Fe derived from the steel sheet can be reacted to form a Fe₂SiO₄ oxide film having a uniform film thickness on the sheet surface.

### <Secondary Annealing Process P3>

In the secondary annealing process P3, the steel sheet is held at an annealing temperature T3 for a constant holding time in a range of 3 seconds to 100 seconds in an atmosphere having a constant value at an oxygen potential PH₂O/PH₂ of less than 0.1000 and a dew point of lower than -20°C. The annealing temperature T3 is a constant temperature in a range of 900°C to 1100°C.

When the oxygen potential PH₂O/PH₂ is 0.1000 or more, Fe₂SiO₄ cannot be sufficiently reduced, and coating adhesion may be deteriorated. Therefore, the oxygen potential PH₂O/PH₂ is less than 0.1000. The oxygen potential PH₂O/PH₂ is preferably 0.0800 or less and more preferably 0.0600 or less.

The lower oxygen potential PH₂O/PH₂, the better, and the oxygen potential can indicate 0.0001 as an operational lower limit.

In addition, the dew point is controlled to be lower than -20°C together with the oxygen potential PH₂O/PH₂. This is because when the dew point is -20°C or higher, an iron-based oxide such as FeO is generated, which adversely affects coating adhesion.

When the annealing temperature T3 is lower than 900°C, reduction of Fe₂SiO₄ does not sufficiently proceed, and coating adhesion may be deteriorated. Therefore, the annealing temperature T3 is 900°C or higher. The annealing temperature T3 is preferably 920°C or higher, and more preferably 940°C or higher.

The upper limit of the annealing temperature T3 is not particularly provided, but when T3 is higher than 1100°C, strain occurs due to the influence of grain boundary sliding and the like, and magnetic characteristics may be deteriorated. Therefore, the annealing temperature T3 is 1100°C or lower. The annealing temperature T3 is preferably 1000°C or lower and more preferably 980°C or lower.

When the holding time is less than 3 seconds, reduction of Fe₂SiO₄ does not sufficiently proceed, and coating adhesion may be deteriorated. Therefore, the holding time is set to 3 seconds or more. The holding time is preferably 10 seconds or more and more preferably 20 seconds or more.

On the other hand, when the holding time is more than 100 seconds, magnetic characteristics may be deteriorated due to the influence of grain boundary sliding. Therefore, the holding time is set to 100 seconds or less. The holding time is preferably 80 seconds or less and more preferably 60 seconds or less.

By controlling the soaking conditions in the secondary annealing process P3 to the above conditions, α-Fe can be uniformly deposited on the sheet surface from the Fe₂SiO₄ oxide film generated in the primary annealing process P2 (Fe₂SiO₄ → 2Fe+SiO₂+O₂). In this way, by uniformly depositing α-Fe on the sheet surface in advance, it is possible to react an insulating coating forming solution to be applied in the subsequent tension-applying insulating coating forming step with α-Fe to promote the formation of a layer contributing to coating adhesion.

The transition from the primary annealing process P2 to the secondary annealing process P3 may be continuously performed with another primary temperature rising process interposed therebetween as shown in FIG. 3. That is, after the primary annealing process P2 is completed, the steel sheet temperature is continuously raised from the annealing temperature T2, and the secondary annealing process P3 may be started at the annealing temperature T3. Alternatively, after the primary annealing process P2 is completed, the steel sheet temperature may be temporarily lowered from the annealing temperature T2 and returned to room temperature, then the steel sheet may be reheated, and the secondary annealing process P3 may be started as it is at the annealing temperature T3.

### [Pickling Step]

As necessary, after the thermal oxidation-reduction annealing step and after the tension-applying insulating coating forming step, a pickling step may be performed. In this pickling step, the reduction annealed steel sheet obtained in the thermal oxidation-reduction annealing step may be immersed in an acid (second treatment solution) containing at least one of hydrochloric acid, sulfuric acid, nitric acid, and phosphoric acid, a total acid concentration of 0.1 vol% to 20.0 vol%, and a solution temperature of 50°C to 90°C for 3 seconds to 60 seconds to obtain the surface-treated steel sheet.

When the total acid concentration of the second treatment solution is less than 0.1 vol%, an active surface state cannot be obtained. On the other hand, when the total acid concentration of the second treatment solution is more than 20.0 vol%, protrusions and recesses are imparted to the surface, and magnetic characteristics may be deteriorated. Therefore, the acid concentration of the second treatment solution is 0.1 vol% to 20.0 vol%. Similarly, when the treatment time of the surface treatment is less than 3 seconds, an active surface state cannot be obtained, and when the treatment time of the surface treatment is more than 60 seconds, protrusions and recesses are imparted to the surface, and magnetic characteristics may be deteriorated.

The pickling step may be omitted, and in that case, the tension-applying insulating coating forming step is performed subsequent to the thermal oxidation-reduction annealing step.

### [Tension-Applying Insulating Coating Forming Step]

The tension-applying insulating coating forming step is performed subsequent to the thermal oxidation-reduction annealing step or the pickling step. In the tension-applying insulating coating forming step, the secondary coating (tension-applying insulating coating) 3 is formed on the surface of the reduction annealed steel sheet obtained in the thermal oxidation-reduction annealing step or the surface of the pickled sheet obtained in the pickling step. The secondary coating 3 is a coating containing a phosphate and silica, and specific components and the content thereof may be under known conditions.

The tension-applying insulating coating forming step includes a secondary coating chemical solution applying step and a baking step. In the following description, the reduction annealed steel sheet and the pickled sheet are collectively referred to as "steel sheet".

### <Secondary Coating Chemical Solution Applying Step>

In the secondary coating chemical solution applying step, an insulating coating forming solution (hereinafter, also referred to as "secondary coating chemical solution") containing at least one of aluminum phosphate and silica as a main component is applied to the surface of the steel sheet. The secondary coating chemical solution preferably does not contain chromium.

In addition to aluminum phosphate, a phosphate such as Ca, Al, or Sr may be used. The silica is not particularly limited to silica having a specific property. The particle size is not particularly limited to a specific particle size, but is preferably 200 nm (number average particle size) or less. For example, the particle size may be 5 nm to 30 nm. When the particle size exceeds 200 nm, silica may settle in the coating solution.

### <Baking Step>

In the baking step subsequent to the secondary coating chemical solution applying step, the steel sheet coated with the secondary coating chemical solution is subjected to a heat treatment to form an insulating coating (secondary coating 3) on the surface of the steel sheet. This insulating coating reduces the iron loss as a single steel sheet by applying tension to the steel sheet, and reduces the iron loss as a core by securing electrical insulation properties between the steel sheets when the grain-oriented electrical steel sheets are stacked and used.

As heating conditions of the heat treatment, for example, the heat treatment at a constant temperature in a range of 350°C to 1150°C for a constant time in a range of 5 to 300 seconds can be exemplified. In addition, the oxygen potential PH₂O/PH₂ of the atmosphere may be controlled as necessary.

**In** the present embodiment, the thermal oxidation-reduction annealing step is two-stage heating of the primary annealing process P2 and the secondary annealing process P3, whereby α-Fe is uniformly deposited on the sheet surface in advance. Therefore, this α-Fe dissolves into the secondary coating chemical solution, and the Fe atoms diffuse into the secondary coating chemical solution. Fe is solid-solved in a phosphate, and a Fe-P-O compound is formed at the interface between the base steel sheet 2 and the secondary coating 3. Since this Fe-P-O compound is present at the interface, the grain-oriented electrical steel sheet 1 according to the present embodiment has high coating adhesion and excellent iron loss characteristics.

The grain-oriented electrical steel sheet 1 illustrated in FIG. 1 is manufactured by the above steps.

The steel sheet after the formation of the secondary coating 3 may be subjected to flattening annealing for shape correction as necessary. By performing this flattening annealing, the iron loss of the grain-oriented electrical steel sheet 1 can be further reduced.

In addition, before the tension-applying insulating coating forming step or after the tension-applying insulating coating forming step, a magnetic domain control treatment may be performed as necessary. By performing the magnetic domain control treatment, the iron loss of the grain-oriented electrical steel sheet can be further reduced.

When the magnetic domain control treatment is performed before the tension-applying insulating coating forming step, it is sufficient if linear or dotted groove parts extending in a direction intersecting the rolling direction are formed at predetermined intervals along the rolling direction. In addition, when the magnetic domain control treatment is performed after the tension-applying insulating coating forming step, it is sufficient if linear or dotted stress strain parts extending in a direction intersecting the rolling direction are formed at predetermined intervals along the rolling direction. The width of the 180° magnetic domain is narrowed (180° magnetic domain is refined) by the magnetic domain control treatment.

In a case where a groove part is formed, a mechanical groove forming method using a gear or the like, a chemical groove forming method by electrolytic etching, a thermal groove forming method by laser irradiation, and the like can be applied. In addition, in the case of forming a stress strain part, laser beam irradiation, electron beam irradiation, or the like can be applied.

According to the method for manufacturing a grain-oriented electrical steel sheet described above, it is possible to manufacture a grain-oriented electrical steel sheet having higher coating adhesion without impairing magnetic characteristics.

### Examples

Next, the effects of one aspect of the present invention will be more specifically described with reference to Examples, but various conditions in Examples are examples adopted to confirm the feasibility and effects of the present invention, and the present invention is not limited only to these examples. The present invention can adopt various conditions as long as the object of the present invention is achieved without departing from the gist of the present invention.

First, in the hot rolling step, slabs (steel pieces) a to j having chemical compositions shown in Table 1 below were prepared.

**[Table 1]**

| Slab No. | Chemical composition of slab (mass%, balance: Fe and impurities) | | | | | | | | | | | | | | | | |
|---|---|---|---|---|---|---|---|---|---|---|---|---|---|---|---|---|---|
| | C | Si | Mn | S | sol. Al | N | P | Cu | Sn | Cr | B | Te | Nb | Ni | Sb | Bi | Mo |
| a | 0.033 | 3.05 | 0.41 | 0.0085 | 0.016 | 0.003 | - | - | - | - | - | - | - | - | - | - | - |
| b | 0.122 | 3.82 | 0.02 | 0.0364 | 0.016 | 0.016 | - | - | - | - | - | - | - | - | - | - | - |
| c | 0.062 | 3.35 | 0.12 | 0.0086 | 0.026 | 0.008 | - | 0.15 | - | - | - | - | - | - | - | - | 0.01 |
| d | 0.055 | 3.41 | 0.10 | 0.0083 | 0.029 | 0.009 | - | - | - | 0.15 | - | - | - | 0.05 | - | - | - |
| e | 0.081 | 3.32 | 0.08 | 0.0233 | 0.027 | 0.007 | 0.005 | - | - | 0.05 | - | - | - | - | - | - | - |
| f | 0.083 | 3.29 | 0.08 | 0.0248 | 0.027 | 0.007 | - | - | 0.10 | - | - | - | - | - | - | 0.0084 | - |
| g | 0.084 | 3.25 | 0.15 | 0.0080 | 0.024 | 0.007 | 0.015 | - | - | 0.15 | - | - | 0.0152 | - | - | - | - |
| h | 0.075 | 3.34 | 0.13 | 0.0067 | 0.023 | 0.008 | - | - | - | - | 0.002 | - | - | - | - | - | - |
| i | 0.051 | 3.40 | 0.11 | 0.0185 | 0.028 | 0.007 | - | 0.25 | - | - | - | - | - | - | 0.03 | - | 0.02 |
| j | 0.052 | 3.36 | 0.12 | 0.0193 | 0.029 | 0.007 | - | - | - | - | - | 0.0005 | - | - | - | 0.0016 | 0.03 |

Specifically, in all of Slab Nos. a to j, the chemical composition was set to include, by mass%,
C: 0.020% to 0.150%,
Si: 3.00% to 4.00%,
Mn: 0.01% to 0.50%,
S: 0.0010% to 0.0400%,
acid-soluble Al: 0.010% to 0.050%,
N: 0.002% to 0.020%, and
a balance being Fe and impurities.

In addition, Slab Nos. c to j further included, as a chemical composition, by mass%, at least one selected from the group consisting of:
Bi: 0.0200% or less,
P: 0.100% or less,
Sn: 0.50% or less,
Cu: 0.50% or less,
Cr: 0.50% or less,
Sb: 0.20% or less,
Mo: 0.10% or less,
Nb: 0.0200% or less,
B: 0.0200% or less,
Te: 0.0200% or less,
Ni: 0.20% or less, and
Se: 0.0200% or less.

Then, each of these slabs a to j was heated to a constant temperature in a range of 1100°C to 1400°C and subjected to hot rolling to obtain a hot-rolled steel sheet having a sheet thickness of 2.3 mm.

Subsequently, in the hot-band annealing step, the hot-rolled steel sheet obtained in the hot rolling step was subjected to hot-band annealing at 1100°C for 100 seconds, and the surface thereof was immersed in a pickling solution to be pickled. In this way, a hot-band annealed sheet was obtained.

Subsequently, in the cold rolling step, the hot-band annealed sheet after the pickling was subjected to one-time cold rolling or a plurality of times of cold rolling with intermediate annealing interposed therebetween to obtain a cold-rolled steel sheet having a base steel sheet thickness shown in the following Table 2A of 0.22 mm to 0.23 mm.

Subsequently, in the decarburization annealing step, the cold-rolled steel sheet obtained in the cold rolling step was subjected to decarburization annealing at 820°C for 140 seconds with a mixed gas of nitrogen and hydrogen to obtain a decarburization-annealed steel sheet. The mixed gas of nitrogen and hydrogen was a humidified atmosphere.

Subsequently, some of the decarburization-annealed steel sheets were subjected to the nitriding treatment step after the decarburization annealing step. That is, for Test Nos. 1, 2, 9, 10, 18, 19, and 20, the nitriding treatment was performed after the decarburization annealing.

Subsequently, in the separator applying step, an annealing separator mainly composed of MgO and alumina in a slurry state was applied to the surface of the decarburization-annealed steel sheet after the decarburization annealing step or the surface of the nitridation annealed steel sheet after the nitridation annealing step. The composition of the annealing separator used is as shown in Table 2B.

Subsequently, in the finish annealing step, the decarburization-annealed steel sheet coated with the annealing separator was subjected to finish annealing at 1200°C for about 20 hours. The annealing atmosphere in the temperature-raising step of the finish annealing step was a mixed gas of nitrogen and hydrogen, and the annealing atmosphere in the soaking step at 1200°C was a hydrogen gas.

Subsequently, in the surface treatment step, the finish annealed steel sheet obtained in the finish annealing step was surface-treated by being immersed in a treatment solution containing sulfuric acid and having the concentration (acid concentration) and temperature shown in Table 2C for a time shown in Table 2C, thereby obtaining a surface-treated steel sheet.

**[Table 2A]**

| Test No. | Slab No. | Base steel sheet thickness | Primary temperature rising step P1 | | | Primary annealing process P2 | | |
|---|---|---|---|---|---|---|---|---|
| | | | Average temperature rising rate (550°C to 800°C) | Dew point | Oxygen potential | Annealing temperature T2 | Annealing time (holding time) | Oxygen potential |
| | | mm | °C/s | °C | - | °C | s | - |
| 1 | c | 0.22 | 150 | -5 | 0.4189 | 860 | 30 | 0.66 |
| 2 | d | 0.22 | 1650 | -5 | 0.4189 | 860 | 30 | 0.66 |
| 3 | e | 0.22 | 700 | -30 | 0.0507 | 835 | 100 | 0.45 |
| 4 | f | 0.23 | 700 | -30 | 0.0507 | 835 | 100 | 0.45 |
| 5 | g | 0.22 | 1000 | -30 | 0.0507 | 835 | 100 | 0.45 |
| 6 | h | 0.23 | 1000 | -10 | 0.1422 | 820 | 120 | 0.58 |
| 7 | i | 0.22 | 1400 | -10 | 0.1422 | 820 | 120 | 0.58 |
| 8 | j | 0.23 | 1400 | -10 | 0.1422 | 820 | 120 | 0.58 |
| 9 | c | 0.23 | 90 | -7 | 0.3594 | 860 | 30 | 0.66 |
| 10 | d | 0.22 | 2010 | -7 | 0.3594 | 860 | 30 | 0.66 |
| 11 | e | 0.23 | 700 | -1 | 0.5649 | 835 | 100 | 0.45 |
| 12 | f | 0.23 | 700 | -20 | 0.0125 | 780 | 100 | 0.45 |
| 13 | g | 0.22 | 1000 | -20 | 0.0125 | 920 | 100 | 0.45 |
| 14 | h | 0.23 | 1000 | -15 | 0.1899 | 820 | 8 | 0.58 |
| 15 | i | 0.23 | 1400 | -15 | 0.1899 | 820 | 210 | 0.58 |
| 16 | j | 0.22 | 1400 | -15 | 0.1899 | 820 | 120 | 0.09 |
| 17 | a | 0.23 | 120 | -5 | 0.4189 | 890 | 10 | 10.52 |
| 18 | b | 0.23 | 120 | -5 | 0.4189 | 890 | 10 | 0.13 |
| 19 | c | 0.23 | 150 | -7 | 0.3594 | 860 | 30 | 0.66 |
| 20 | d | 0.23 | 1650 | -7 | 0.3594 | 860 | 30 | 0.66 |
| 21 | e | 0.22 | 700 | -7 | 0.3594 | 835 | 100 | 0.45 |
| 22 | f | 0.23 | 700 | -20 | 0.0125 | 835 | 100 | 0.45 |
| 23 | e | 0.22 | 700 | -20 | 0.0125 | 835 | 100 | 0.45 |
| 24 | e | 0.22 | 700 | -20 | 0.0125 | 835 | 100 | 0.45 |
| 25 | f | 0.22 | 700 | -20 | 0.0125 | 835 | 100 | 0.13 |
| 26 | f | 0.22 | 700 | -20 | 0.0125 | 835 | 100 | 7.85 |
| 27 | a | 0.23 | 120 | -5 | 0.4189 | 890 | 10 | 10.52 |
| 28 | b | 0.23 | 120 | -5 | 0.4189 | 890 | 10 | 0.13 |
| 29 | a | 0.22 | 90 | -7 | 0.3594 | 860 | 30 | 0.66 |
| 30 | b | 0.22 | 2010 | -7 | 0.3594 | 860 | 30 | 0.66 |

**[Table 2B]**

| Test No. | Secondary annealing process P3 | | | | Annealing separator | | | | |
|---|---|---|---|---|---|---|---|---|---|
| | Annealing temperature T3 | Annealing time (holding time) | Oxygen potential | Dew point | MgO | Alumina | Bismuth chloride | Bismuth oxychloride | Iron chloride |
| | °C | s | - | °C | mass% | mass% | mass% | mass% | mass% |
| 1 | 920 | 10 | 0.0735 | -26 | 45.2 | 45.6 | 0.0 | 5.0 | 4.2 |
| 2 | 920 | 10 | 0.0735 | -26 | 18.5 | 76.6 | 0.0 | 0.0 | 4.9 |
| 3 | 950 | 20 | 0.0153 | -28 | 18.8 | 76.4 | 0.0 | 4.8 | 0.0 |
| 4 | 950 | 20 | 0.0153 | -28 | 36.2 | 53.5 | 5.1 | 0.0 | 5.2 |
| 5 | 950 | 20 | 0.0153 | -28 | 46.5 | 47.2 | 0.0 | 6.3 | 0.0 |
| 6 | 970 | 15 | 0.0238 | -31 | 47.0 | 47.2 | 0.0 | 5.8 | 0.0 |
| 7 | 970 | 15 | 0.0238 | -31 | 47.1 | 47.0 | 0.0 | 5.9 | 0.0 |
| 8 | 970 | 15 | 0.0238 | -31 | 44.9 | 44.9 | 0.0 | 10.2 | 0.0 |
| 9 | 920 | 10 | 0.0735 | -26 | 18.7 | 76.6 | 0.0 | 0.0 | 4.7 |
| 10 | 920 | 10 | 0.0735 | -26 | 19.2 | 75.4 | 0.0 | 5.4 | 0.0 |
| 11 | 950 | 20 | 0.0153 | -28 | 19.2 | 75.6 | 0.0 | 0.0 | 5.2 |
| 12 | 950 | 20 | 0.0153 | -28 | 18.5 | 76.2 | 0.0 | 5.3 | 0.0 |
| 13 | 950 | 20 | 0.0153 | -28 | 18.7 | 76.4 | 0.0 | 4.9 | 0.0 |
| 14 | 970 | 15 | 0.0238 | -31 | 40.3 | 54.5 | 0.0 | 5.2 | 0.0 |
| 15 | 970 | 15 | 0.0238 | -31 | 40.1 | 54.6 | 0.0 | 5.3 | 0.0 |
| 16 | 970 | 15 | 0.0238 | -31 | 39.7 | 55.5 | 0.0 | 4.8 | 0.0 |
| 17 | 900 | 90 | 0.0925 | -23 | 39.8 | 55.5 | 0.0 | 4.7 | 0.0 |
| 18 | 880 | 90 | 0.0925 | -23 | 44.9 | 44.7 | 0.0 | 10.4 | 0.0 |
| 19 | 1110 | 10 | 0.0735 | -26 | 44.6 | 45.5 | 0.0 | 9.9 | 0.0 |
| 20 | 920 | 2 | 0.0735 | -26 | 46.0 | 47.7 | 0.0 | 6.3 | 0.0 |
| 21 | 950 | 110 | 0.0153 | -28 | 47.1 | 46.7 | 0.0 | 6.2 | 0.0 |
| 22 | 950 | 20 | 0.1143 | -21 | 19.4 | 75.2 | 0.0 | 5.4 | 0.0 |
| 23 | 950 | 20 | 0.0633 | -15 | 40.3 | 54.5 | 0.0 | 5.2 | 0.0 |
| 24 | 950 | 20 | 0.0169 | -30 | 40.1 | 54.6 | 0.0 | 5.3 | 0.0 |
| 25 | 950 | 20 | 0.0169 | -30 | 40.3 | 54.5 | 0.0 | 5.2 | 0.0 |
| 26 | 950 | 20 | 0.0169 | -30 | 40.1 | 54.6 | 0.0 | 5.3 | 0.0 |
| 27 | 900 | 90 | 0.0925 | -23 | 39.8 | 55.5 | 0.0 | 4.7 | 0.0 |
| 28 | 880 | 90 | 0.0925 | -23 | 44.9 | 44.7 | 0.0 | 10.4 | 0.0 |
| 29 | 920 | 10 | 0.0735 | -26 | 18.7 | 76.6 | 0.0 | 0.0 | 4.7 |
| 30 | 920 | 10 | 0.0735 | -26 | 19.2 | 75.4 | 0.0 | 5.4 | 0.0 |

**[Table 2C]**

| Test No. | Surface treatment step (before thermal oxidation annealing) | | | Product characteristics | | | Remark |
|---|---|---|---|---|---|---|---|
| | Concentration | Temperature | Time | Coating adhesion | Magnetic flux density | Iron loss | |
| | vol% | °C | S | - | T | W/kg | |
| 1 | 3.0 | 70 | 10 | VG | 1.97 | 0.67 | Invention Example |
| 2 | 3.0 | 70 | 10 | VG | 1.95 | 0.66 | Invention Example |
| 3 | 5.0 | 60 | 20 | EX | 1.97 | 0.63 | Invention Example |
| 4 | 5.0 | 60 | 20 | EX | 1.98 | 0.64 | Invention Example |
| 5 | 5.0 | 60 | 20 | EX | 1.98 | 0.63 | Invention Example |
| 6 | 2.0 | 80 | 30 | EX | 1.96 | 0.64 | Invention Example |
| 7 | 2.0 | 80 | 30 | EX | 1.98 | 0.62 | Invention Example |
| 8 | 2.0 | 80 | 30 | EX | 1.96 | 0.63 | Invention Example |
| 9 | 3.0 | 70 | 10 | G | 1.97 | 0.64 | Invention Example |
| 10 | 3.0 | 70 | 10 | G | 1.96 | 0.66 | Invention Example |
| 11 | 5.0 | 60 | 20 | F | 1.95 | 0.65 | Invention Example |
| 12 | 5.0 | 60 | 20 | NG | - | - | Comparative Example |
| 13 | 5.0 | 60 | 20 | NG | - | - | Comparative Example |
| 14 | 2.0 | 80 | 30 | NG | - | - | Comparative Example |
| 15 | 2.0 | 80 | 30 | NG | - | - | Comparative Example |
| 16 | 2.0 | 80 | 30 | NG | - | - | Comparative Example |
| 17 | None | None | None | NG | - | - | Comparative Example |
| 18 | None | None | None | NG | - | - | Comparative Example |
| 19 | 3.0 | 70 | 10 | NG | - | - | Comparative Example |
| 20 | 3.0 | 70 | 10 | NG | - | - | Comparative Example |
| 21 | 5.0 | 60 | 20 | NG | - | - | Comparative Example |
| 22 | 5.0 | 60 | 20 | NG | - | - | Comparative Example |
| 23 | 5.0 | 60 | 20 | NG | - | - | Comparative Example |
| 24 | None | None | None | NG | - | - | Comparative Example |
| 25 | 5.0 | 60 | 20 | VG | 1.97 | 0.64 | Invention Example |
| 26 | 5.0 | 60 | 20 | VG | 1.96 | 0.64 | Invention Example |
| 27 | 3.0 | 70 | 20 | NG | - | - | Comparative Example |
| 28 | 3.0 | 70 | 20 | NG | - | - | Comparative Example |
| 29 | 0.1 | 70 | 10 | F | 1.95 | 0.73 | Invention Example |
| 30 | 19.8 | 70 | 10 | F | 1.94 | 0.72 | Invention Example |

Subsequently, in the thermal oxidation-reduction annealing step, the surface-treated steel sheet after the surface treatment step was subjected to the heat treatment of performing intermediate annealing. This thermal oxidation-reduction annealing step included the primary temperature rising process P1, the primary annealing process P2, and the secondary annealing process P3.

In the primary temperature rising process P1, after the surface treatment step and before the subsequent primary annealing process P2, the surface-treated steel sheet was heated to raise the temperature. In the primary temperature rising process P1, the temperature rising rate at 550°C to 800°C and the oxygen potential PH₂O/PH₂ were set as shown in Table 2A.

In addition, the primary annealing process P2 was performed subsequent to the primary temperature rising process P1. Specifically, in the primary annealing process P2, the annealing temperature T2, the annealing time (holding time), and the oxygen potential PH₂O/PH₂ were as shown in Table 2A.

Further, after the primary annealing process P2, the heating temperature was increased to perform the secondary annealing process P3. Specifically, in the secondary annealing process P3, the annealing temperature T3, the annealing time (holding time), and the oxygen potential PH₂O/PH₂ were as shown in Table 2B.

After the thermal oxidation-reduction annealing step described above, for Test Nos. 6 to 8, the pickling step of performing a pickling treatment with a sulfuric acid solution having a concentration of 1% and set at 60°C for 10 seconds was performed. On the other hand, for other Test Nos. 1 to 5 and 9 to 30, the pickling step after the thermal oxidation-reduction annealing step was not performed.

Further, the tension-applying insulating coating forming step is performed subsequent to the thermal oxidation-reduction annealing step or the pickling step. That is, in the tension-applying insulating coating forming step, the secondary coating (tension-applying insulating coating) containing aluminum phosphate and silica was formed on the surface of the reduction annealed steel sheet obtained in the thermal oxidation-reduction annealing step or the surface of the pickled sheet obtained in the pickling step. The tension-applying insulating coating forming step includes a secondary coating chemical solution applying step and a baking step. In the following description, the reduction annealed steel sheet and the pickled sheet are collectively referred to as "steel sheet".

In the secondary coating chemical solution applying step, an insulating coating forming solution (hereinafter, also referred to as "secondary coating chemical solution") containing aluminum phosphate and silica was applied to the surface of the steel sheet.

In the baking step subsequent to the secondary coating chemical solution applying step, the steel sheet coated with the secondary coating chemical solution was subjected to a heat treatment to form an insulating coating (secondary coating) on the surface of the steel sheet. The heating condition of the heat treatment at this time was maintained at 900°C for a constant time in a range of 10 to 20 seconds. The annealing atmosphere was a humidified atmosphere in which a mixed gas of nitrogen and hydrogen was used and the dew point was controlled to be 20°C or higher.

The coating adhesion, the iron loss, and the magnetic flux density were evaluated as product characteristics for each of Test Nos. 1 to 26 obtained by the above steps.

Specifically, first, the coating adhesion was evaluated by a coating residual area fraction when the test piece is wound around a cylinder having a diameter of 20 mm and bent 180°. The area fraction of the residual surface of the coating in the area of the steel sheet in contact with the cylinder was calculated. The area of the steel sheet in contact with the roll was determined by calculation. The area of the residual surface was determined by capturing a photograph of the steel sheet after the test and performing image analysis on the captured image.

A case where the coating residual area fraction was 95% or more was evaluated as Excellent (EX), a case where the coating residual area fraction was 90% or more and less than 95% was evaluated as Very Good (VG), a case where the coating residual area fraction was 85% or more and less than 90% was evaluated as Good (G), a case where the coating residual area fraction was 80% or more and less than 85% was evaluated as Fair (F), and a case where the coating residual area fraction was less than 80% was evaluated as Not Good (NG). A case when the coating residual area fraction was 80% or more was determined to be acceptable for coating adhesion. The results are as shown in Table 2C.

Subsequently, for the iron loss characteristics, the test piece was evaluated according to a single sheet tester (SST). Iron loss W17/50 (W/kg) defined as a power loss per unit weight (1 kg) of the steel sheet was measured under the conditions of an AC frequency of 50 Hz and an excitation magnetic flux density of 1.7 T. The case where the iron loss W17/50 was less than 0.75 W/kg was determined as acceptable. For the magnetic flux density, magnetic flux density B8 (T) in the rolling direction was measured by applying a magnetic field of 800 A/m to the test piece. The results are as shown in Table 2C.

In all of Steel Nos. 1 to 11, 25, 26, 29, and 30 as the invention examples, in the primary annealing process P2, the steel sheet temperature was held at a constant temperature in a range of 800°C to 900°C for a constant holding time in a range of 10 seconds to 200 seconds in an atmosphere having a constant value in a range of an oxygen potential PH₂O/PH₂ of 0.10 to 10.00. In addition, in all of Steel Nos. 1 to 11, in the secondary annealing process P3, the steel sheet temperature was maintained at a constant temperature in a range of 900°C to 1100°C for a constant holding time in a range of 3 seconds to 100 seconds in an atmosphere having a constant value at an oxygen potential PH₂O/PH₂ of less than 0.1000.

As a result, in all of these Steel Nos. 1 to 11, 25, 26, 29, and 30, both the coating adhesion and the iron loss satisfied the acceptance criteria. In particular, Steel Nos. 1 to 8, 25, and 26 showed high coating adhesion, and among them, Steel Nos. 3 to 8 exhibited the highest coating adhesion.

In addition, in all of Test Nos. 1 to 11, 25, 26, 29, and 30, no significant decrease was observed in the magnetic flux density. Therefore, both the coating adhesion and the iron loss satisfied the acceptance criteria without impairing the magnetic flux density.

On the other hand, in Steel Nos. 12 to 24, 27, and 28 as comparative examples, the coating adhesion did not satisfy the acceptance criteria in all cases, and thus the iron loss was also unmeasurable.

Specifically, in Steel No. 12, the annealing temperature T2 was 780°C, which was lower than 800°C as the lower limit. As a result, the coating adhesion was insufficient.

In Steel No. 13, the annealing temperature T2 was 920°C, which was higher than 900°C as the upper limit. As a result, the coating adhesion was insufficient.

In Steel No. 14, the annealing time was 8 seconds, which was less than 10 seconds as the lower limit. As a result, the coating adhesion was insufficient.

In Steel No. 15, the annealing time was 210 seconds, which was more than 200 seconds as the upper limit. As a result, the coating adhesion was insufficient.

In Steel No. 16, the oxygen potential in the primary annealing process P2 was 0.09, which was less than 0.10 as the lower limit. As a result, the coating adhesion was insufficient.

In Steel No. 17, the oxygen potential in the primary annealing process P2 was 10.52, which was more than 10.00 as the upper limit. In addition, the surface treatment step was not performed. As a result, the coating adhesion was insufficient.

In Steel No. 18, the annealing temperature T3 in the secondary annealing process P3 was 880°C, which was lower than 900°C as the lower limit. In addition, the surface treatment step was not performed. As a result, the coating adhesion was insufficient.

In Steel No. 19, the annealing temperature T3 in the secondary annealing process P3 was 1110°C, which was higher than 1100°C as the upper limit. As a result, the coating adhesion was insufficient.

In Steel No. 20, the annealing time in the secondary annealing process P3 was 2 seconds, which was less than 3 seconds as the lower limit. As a result, the coating adhesion was insufficient.

In Steel No. 21, the annealing time in the secondary annealing process P3 was 110 seconds, which was more than 100 seconds as the upper limit. As a result, the coating adhesion was insufficient.

In Steel No. 22, the oxygen potential in the secondary annealing process P3 was 0.1255, which was more than 0.1000 as the upper limit. As a result, the coating adhesion was insufficient.

In Steel No. 23, the dew point in the secondary annealing process P3 was -20°C or higher, which was higher than a value of lower than -20°C as the upper limit. As a result, the coating adhesion was insufficient.

In Steel No. 24, the surface treatment step was not performed. As a result, the coating adhesion was insufficient.

In Steel No. 27, the oxygen potential in the primary annealing process P2 was 10.52, which was more than 10.00 as the upper limit. As a result, the coating adhesion was insufficient.

In Steel No. 28, the annealing temperature T3 in the secondary annealing process P3 was 880°C, which was lower than 900°C as the lower limit. As a result, the coating adhesion was insufficient.

From the above results, it has been confirmed that, in order to satisfy the acceptance criteria in both the coating adhesion and the iron loss, it is necessary to maintain the steel sheet temperature at a constant temperature in a range of 800°C to 900°C for a constant holding time in a range of 10 seconds to 200 seconds in an atmosphere having a constant value in a range of an oxygen potential PH₂O/PH₂ of 0.10 to 10.00 in the primary annealing process P2, and to maintain the steel sheet temperature at a constant temperature in a range of 900°C to 1100°C for a constant holding time in a range of 3 seconds to 100 seconds in an atmosphere having a constant value at an oxygen potential PH₂O/PH₂ of less than 0.1000 in the secondary annealing process P3.

### INDUSTRIAL APPLICABILITY

According to the present invention, it is possible to manufacture a grain-oriented electrical steel sheet having higher coating adhesion without impairing magnetic characteristics. Therefore, industrial applicability is high.

### REFERENCE SIGNS LIST

1 Grain-oriented electrical steel sheet
3 Secondary coating (tension-applying insulating coating)
P1 Primary temperature rising process
P2 Primary annealing process
P3 Secondary annealing process

## Claims

1. A method for manufacturing a grain-oriented electrical steel sheet, the method comprising:
a hot rolling step of heating and hot rolling a slab including, as a chemical composition, by mass%,
C: 0.020% to 0.150%,
Si: 3.00% to 4.00%,
Mn: 0.01% to 0.50%,
S: 0.0010% to 0.0400%,
acid-soluble Al: 0.010% to 0.050%,
N: 0.002% to 0.020%,
Bi: 0.0000% to 0.0200%,
P: 0.000% to 0.100%,
Sn: 0.00% to 0.50%,
Cu: 0.00% to 0.50%,
Cr: 0.00% to 0.50%,
Sb: 0.00% to 0.20%,
Mo: 0.00% to 0.10%,
Nb: 0.0000% to 0.0200%,
B: 0.0000% to 0.0200%,
Te: 0.0000% to 0.0200%,
Ni: 0.00% to 0.20%,
Se: 0.0000% to 0.0200%, and
a balance being Fe and impurities to obtain a hot-rolled steel sheet;
a hot-band annealing step of subjecting the hot-rolled steel sheet to hot-band annealing to obtain a hot-band annealed sheet and then immersing the hot-band annealed sheet in a pickling solution;
a cold rolling step of subjecting the hot-band annealed sheet to cold rolling to obtain a cold-rolled steel sheet;
a decarburization annealing step of subjecting the cold-rolled steel sheet to decarburization annealing to obtain a decarburization-annealed steel sheet;
a separator applying step of applying an annealing separator containing MgO, Al₂Os, and a chloride to a surface of the decarburization-annealed steel sheet;
a finish annealing step of subjecting the decarburization-annealed steel sheet coated with the annealing separator to finish annealing to obtain a finish-annealed sheet;
a surface treatment step of pickling a surface of the finish-annealed sheet to obtain a surface-treated steel sheet;
a thermal oxidation-reduction annealing step of subjecting the surface-treated steel sheet to two-stage annealing to obtain a reduction annealed steel sheet; and
a tension-applying insulating coating forming step of forming a tension-applying insulating coating containing a phosphate and silica on a surface of the reduction annealed steel sheet, wherein
the thermal oxidation-reduction annealing step includes
a primary temperature rising process of heating the surface-treated steel sheet after the surface treatment step to raise the temperature of the surface-treated steel sheet,
a primary annealing process performed subsequent to the primary temperature rising process in which a steel sheet temperature is held at a constant temperature in a range of 800°C to 900°C for a constant holding time in a range of 10 seconds to 200 seconds in an atmosphere having a constant value in a range of an oxygen potential PH₂O/PH₂ of 0.10 to 10.00, and
a secondary annealing process performed after the primary annealing process in which the steel sheet temperature is held at a constant temperature in a range of 900°C to 1100°C for a constant holding time in a range of 3 seconds to 100 seconds in an atmosphere where an oxygen potential PH₂O/PH₂ is constant and less than 0.1000 and a dew point is constant and less than -20°C.

2. The method for manufacturing a grain-oriented electrical steel sheet according to claim 1, wherein in the annealing separator, a content of MgO is 0.0 mass% or more and 79.5 mass% or less, a content of Al₂O₃ is 20.0 mass% or more and 99.5 mass% or less, and the balance is the chloride.

3. The method for manufacturing a grain-oriented electrical steel sheet according to claim 1, wherein in the primary temperature rising process, the oxygen potential PH₂O/PH₂ at a steel sheet temperature of 100°C to 800°C is 0.5000 or less, and
an average temperature rising rate at a steel sheet temperature of 550°C to 800°C is 100°C/s to 2000°C/s.

4. The method for manufacturing a grain-oriented electrical steel sheet according to claim 2, wherein in the primary temperature rising process, the oxygen potential PH₂O/PH₂ at the steel sheet temperature of 100°C to 800°C is 0.5000 or less, and
an average temperature rising rate at the steel sheet temperature of 550°C to 800°C is 100°C/s to 2000°C/s.

5. The method for manufacturing a grain-oriented electrical steel sheet according to any one of claims 1 to 4, wherein a nitridation annealing step of nitridation annealing the decarburization-annealed steel sheet is further comprised after the decarburization annealing step and before the separator applying step.

6. The method for manufacturing a grain-oriented electrical steel sheet according to any one of claims 1 to 4, wherein in the surface treatment step, the finish-annealed sheet is immersed in a first treatment solution containing at least one of hydrochloric acid, sulfuric acid, nitric acid, and phosphoric acid, a total acid concentration of 0.1 vol% to 20.0 vol%, and a solution temperature of 50°C to 90°C for 3 seconds to 60 seconds to obtain the surface-treated steel sheet.

7. The method for manufacturing a grain-oriented electrical steel sheet according to claim 5, wherein in the surface treatment step, the finish-annealed sheet is immersed in a first treatment solution containing at least one of hydrochloric acid, sulfuric acid, nitric acid, and phosphoric acid, a total acid concentration of 0.1 vol% to 20.0 vol%, and a solution temperature of 50°C to 90°C for 3 seconds to 60 seconds to obtain the surface-treated steel sheet.

8. The method for manufacturing a grain-oriented electrical steel sheet according to claim 1 or 2, wherein the slab includes, as the chemical composition, by mass%, at least one selected from the group consisting of:
Bi: more than 0.0000% and 0.0200% or less,
P: more than 0.000% and 0.100% or less,
Sn: more than 0.00% and 0.50% or less,
Cu: more than 0.00% and 0.50% or less,
Cr: more than 0.00% and 0.50% or less,
Sb: more than 0.00% and 0.20% or less,
Mo: more than 0.00% and 0.10% or less,
Nb: more than 0.0000% and 0.0200% or less,
B: more than 0.0000% and 0.0200% or less,
Te: more than 0.0000% and 0.0200% or less,
Ni: more than 0.00% and 0.20% or less, and
Se: more than 0.0000% and 0.0200% or less.
